# EUROPÄISCHE PATENTSCHRIFT

(11) **EP 1 001 151 B1**
(45) Veröffentlichungstag und Bekanntmachung des Hinweises auf die Patenterteilung: **24.11.2004**
(21) Anmeldenummer: 99119247.7
(22) Anmeldetag: 28.09.1999
(51) Int. Cl.: F02D 29/00, F02D 17/00

(54) **Verfahren und Vorrichtung zum kontrollierten Abstellen eines Verbrennungsmotors**
Method and device for controlled stopping of an internal combustion engine
Procédé et dispositif pour arreter de facon controlé un moteur à combustion interne

(30) Priorität: 12.11.1998 DE 19852228
(43) Veröffentlichungstag der Anmeldung: 17.05.2000
(73) Patentinhaber: Bayerische Motoren Werke Aktiengesellschaft, 80809 München (DE)
(72) Erfinder: Fröschl, Joachim, 82211 Herrsching (DE); Schlachetzki, Ulrich, 81927 München (DE)

(56) Entgegenhaltungen:
- EP-A- 0 913 564
- DE-C- 4 338 740
- DE-C- 19 705 340
- US-A- 5 813 630

## Beschreibung

Die Erfindung betrifft ein Verfahren und eine Vorrichtung zum kontrollierten Abstellen eines Verbrennungsmotors gemäß den Oberbegriffen der Ansprüche 1 bzw. 4 (siehe DE-C1-4 338 740).

Herkömmlich wird beim Drehen eines Zündschlüssels in die "Zündung-Aus"-Stellung die Einspritzung und/oder die Zündung eines Motors abgeschaltet. Damit wird eine weitere Verbrennung unterbunden und der Motor läuft entsprechend seines Trägheitsmomentes aus.

Jedoch tritt bei einem solchen Abstellvorgang das Problem auf, daß im Brennraum oder Ansaugtrakt noch unverbranntes Benzin-Luft-Gemisch verbleibt. Dieser Effekt führt bei einem neuen Motorstart zu schlechten Schadstoffemissionswerten. Im Hinblick auf die zukünftige Abgasgesetzgebung ist es jedoch erforderlich, die unverbrannten Benzin-Luft-Anteile vor dem Start eines Motors zu eliminieren.

Dies kann dadurch geschehen, daß die Motorsteuerung die Einspritzung nach dem "Zündung-Aus"-Signal abstellt, die Zündung jedoch weiter ansteuert. Allerdings läuft der Motor dann aufgrund der noch zu verbrennenden Restgasmengen undefiniert aus. In diesem Zusammenhang spricht man auch von "Nachdieseln".

Aufgabe der Erfindung ist es, die Entfernung von Frischgasmengen im Motor bei einem definierten Auslaufverhalten desselben sicherzustellen.

Diese Aufgabe wird durch die in den Ansprüchen 1 und 4 genannten Merkmale verfahrenstechnisch bzw. vorrichtungstechnisch gelöst.

Ein wesentlicher Gedanke der Erfindung ist darin zu sehen, daß der Verbrennungsmotor auch nach dem Zündung-Aus-Signal noch über eine definierte Zeit mit einer bestimmten Umdrehung und eingeschalteter Zündsteuerung weiterbetrieben wird. Da die Kraftstoffeinspritzung in diesem Zeitraum erfindungsgemäß abgeschaltet ist, werden die noch im Ansaugtrakt und dem Brennraum befindlichen Frischgasmengen restlos verbrannt. Nach dem Verbrennen der restlichen Frischgasmengen wird ein rasches Stoppen des Verbrennungsmotors durch Beaufschlagen des Verbrennungsmotors mit der Elektro-Maschine bewirkt. Als Elektro-Maschine (Starter, Generator) eignet sich besonders gut eine kombinierte Starter-Generator-Anordnung, beispielsweise ein Kurbelwellen-Starter-Generator.

Die Erfindung wird nachfolgend anhand eines Ausführungsbeispiels und mit Bezug auf die beiliegenden Zeichnungen näher erläutert. Die Zeichnungen zeigen in
- Fig. 1: ein schematisches Blockdiagramm einer erfindungsgemäßen Vorrichtung zum kontrollierten Abstellen eines Verbrennungsmotors und
- Fig. 2: ein Diagramm, das den Motordrehzahlverlauf bei einem Abstellen gemäß der vorliegenden Erfindung und beim Stand der Technik gegenüberstellt.

Das vorliegende Ausführungbeispiel stellt eine einfache Variante dar und soll nicht als Beschränkung der Erfindung verstanden werden.

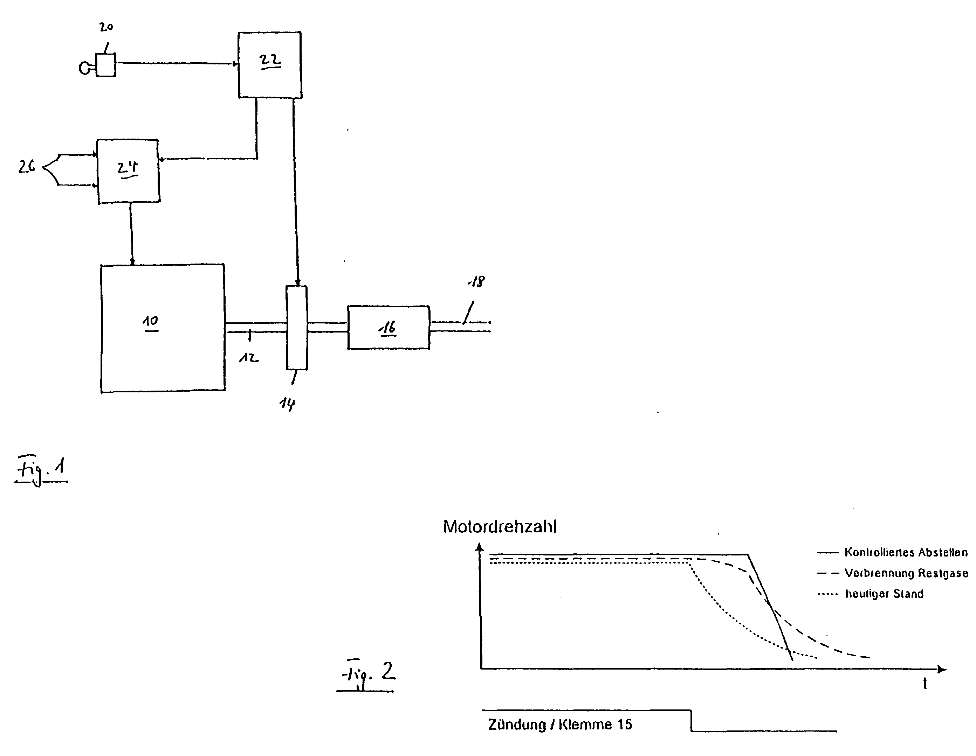

Die dargestellte Ausführungsform gemäß Fig. 1 zeigt einen Verbrennungsmotor 10, der das von ihm erzeugte Drehmoment über eine Abtriebswelle 12 an ein nachfolgendes Getriebe 16 abgibt. Auf der Abtriebswelle 12 ist vorliegend ein kombinierter Starter-Generator 14 angeordnet.

Dieser kombinierte Starter-Generator kann auch an anderer Stelle beim Verbrennungsmotor, beispielsweise direkt an der Kurbelwelle, angeordnet sein. Alternativ können auch Elektromotoren verwendet werden, die indirekt mit dem Verbrennungsmotor gekoppelt sind. Voraussetzung ist jedoch eine mehr oder minder starre Verbindung zwischen der gewählten Elektro-Maschine und dem Verbrennungsmotor 10.

Die Antriebswelle erstreckt sich im weiteren Verlauf bis zum Getriebe 16, welches über eine Abtriebswelle 18 die vom Verbrennungsmotor 10 erzeugte Leistung den (nicht dargestellten) Antriebsrädern zur Verfügung stellt.

Der Verbrennungsmotor wird von einer Motorsteuerung 24 gesteuert, die sowohl die Einspritzung als auch die Zündung bestimmt. Die Motorsteuerung erhält die verschiedensten Eingangssignale, welche schematisch durch die mit der Bezugsziffer 26 bezeichneten Pfeile dargestellt sind.

Ferner ist eine weitere Steuerung 22 vorgesehen, die u. a. mit dem Zündschloß 20 verbunden ist und insofern ein Signal erhält, ob die Zündung einoder ausgeschaltet ist. Die Steuerung 22 ist ferner mit der Motorsteuerung 24 und der Starter-Generator-Anordnung 14 verbunden.

Im folgenden wird die Wirkungsweise der erfindungsgemäßen Vorrichtung beschrieben.

Zunächst ist die Zündung auf "Ein" geschaltet. Wird die Zündung schließlich auf "Aus" geschaltet, so registriert dies die Steuerung 22 und beaufschlagt die Motorsteuerung 24 in der Weise, daß diese die Kraftstoffeinspritzung sofort unterbricht, die Zündung jedoch weiter ansteuert.

Gleichzeitig wird die Starter-Generator-Anordnung 14 beaufschlagt, daß sie den Verbrennungsmotor über zwei Kurbelwellenumdrehungen auf der Drehzahl hält, die beim Empfang des "Zündung-Aus"-Signals vorlag. In diesem Zeitraum werden nunmehr die noch im Ansaugtrakt und in den Verbrennungsräumen befindlichen Frischgasmengen restlos verbrannt.

Nach den zwei Kurbelwellenumdrehungen bringt die Starter-Generator-Anordnung 14 den Verbrennungsmotor 10 möglichst rasch zum Stillstand.

Alternativ kann dies mit einem bestimmten Drehzahl- oder Drehmomentverlauf erfolgen.

Ein durch die Erfindung bewirkter Effekt ist in Fig. 2 zu sehen. Klein gestrichelt ist der Motordrehzahlverlauf bei einem herkömmlichen Abstellvorgang dargestellt. Wird die Zündung auf "Aus" gestellt (vgl. unterer Teil des Diagramms), so fällt die Motordrehzahl entsprechend dem Trägheitsmoment des Motors ab. Will man die Restgase in den Brennräumen und dem Ansaugtrakt noch verbrennen, so kommt es zu dem "Nachdiesel"-Effekt, der in dem lang gestrichelten Kurvenverlauf zu erkennen ist. Hieraus resultiert ein undefinierter Abstellvorgang.

Mit der oben beschriebenen Erfindung kann ein Motordrehzahlverlauf erreicht werden, wie er mit durchgezogener Linie in Fig. 2 dargestellt ist. Über eine bestimmte Zeitspanne oder eine bestimmte Kurbelwellenumdrehungszahl nach dem "Zündung-Aus"-Signal wird die Motordrehzahl noch aufrechterhalten. Sodann fällt die Motordrehzahl steil ab, und in definierter Weise wird - eher als bei den herkömmlichen Abstellverfahren - der Stillstand des Verbrennungsmotors erreicht.

Insgesamt stellt das erfindungsgemäße Verfahren ein reproduzierbares Abstellverhalten und geringe Schadstoffemissionswerte sicher. Ferner sollte darauf hingewiesen werden, daß durch das schnelle Abbremsen des Verbrennungsmotors der Energieaufwand für die Verlängerung der Leerlaufdrehzahlphase, bedingt durch das Halten der Drehzahl, kompensiert wird. Im übrigen können eventuell vorhandene Resonanzstellen unterhalb der Leerlaufdrehzahl rasch durchfahren werden.

## Patentansprüche

1. Verfahren zum kontrollierten Abstellen eines Verbrennungsmotors, der eine Kraftstoffeinspritzsteuerung und eine Zündsteuerung umfaßt und bei dem weiter ein unmittelbar oder mittelbar mit dem Verbrennungsmotor gekoppelter Elektromotor und/oder Generator (Elektro-Maschine) vorgesehen ist, und welches folgende Schritte aufweist :
Erfassen eines Abstellsignals für den Verbrennungsmotor,
Unterbrechung der Kraftstoffeinspritzung bei gleichzeitiger Aufrechterhaltung der Zündung, und **gekennzeichnet durch** die Schritte:
Aufrechterhaltung einer bestimmten Motordrehzahl über eine bestimmte Zeit oder eine bestimmte Anzahl von Kurbelwellenumdrehungen nach dem Abstellsignal mittels der Elektro-Maschine und
anschließendes Stoppen des Verbrennungsmotors mittels der Elektro-Maschine.

2. Verfahren nach Anspruch 1,
**dadurch gekennzeichnet,**
**daß** die Zeit über die die bestimmte Verbrennungmotordrehzahl aufrechterhalten wird 50 bis 500 ms, insbesondere 200 ms, beträgt oder
**daß** eine Kurbelwellenumdrehungszahl von 1 bis 4, insbesondere 2, gewählt wird.

3. Verfahren nach Anspruch 1 oder 2,
**dadurch gekennzeichnet,**
**daß** das Stoppen mit einem vorbestimmten Drehzahl- oder Drehmomentverlauf erfolgt.

4. Vorrichtung zum kontrollierten Abstellen eines Verbrennungsmotors mit einer Kraftstoffeinspritzsteuerung, einer Zündsteuerung sowie einem unmittelbar oder mittelbar mit dem Verbrennungsmotor gekoppelten Elektromotor und/oder Generator (Elektro-Maschine) und einem Steuergerät, wobei
das Steuergerät zur Erkennung des Zündungs-Signals ausgebildet ist,
das Steuergerät mit der Kraftstoffeinspritzsteuerung und der Zündsteuerung verbunden ist und weiter ausgebildet ist, um bei kennung des Zündung-Aus-Signals die Kraftstoffeinspritzung bei gleichzeitiger Aufrechterhaltung der Zündung zu unterbrechen, und
**dadurch gekennzeichnet,**
**daß** das Steuergerät mit der Elektro-Maschine verbunden ist, um den Verbrennungsmotor nach dem Zündung-Aus-Signal zunächst mit einer bestimmten Drehzahl weiterzubetreiben und anschließend mit einem definierten Drehmomentverlauf zu stoppen.

5. Vorrichtung nach Anspruch 4,
**dadurch gekennzeichnet,**
**daß** die Elektro-Maschine ein Starter und/oder Generator, insbesondere ein Kurbelwellen-Starter-Generator, ist.

## Claims

1. A method of controlled stopping of an internal combustion engine comprising a fuel injection control unit and an ignition control unit, wherein an electric motor and/or generator (electric machine) is directly or indirectly coupled to the engine, the steps of the method being as follows:
detection of a signal for stopping the engine,
shutting-off the fuel injection while maintaining the ignition and
**characterised by** the steps of:
maintaining a defined engine speed for a defined time or a defined number of crankshaft revolutions after the stoppage signal, using the electric machine, and
subsequently stopping the engine by means of the electric machine.

2. A method according to claim 1, **characterised in that** the time during which the defined engine speed is maintained is 50 to 500 ms, especially 200 ms, or the chosen number of crankshaft revolutions is 1 to 4, especially 2.

3. A method according to claim 1 or 2, **characterised in that** stopping is effected in accordance with a preset speed or torque curve.

4. A device for controlled stopping of an internal combustion engine comprising a fuel injection control unit, an ignition control unit, an electric motor or generator (electric machine) directly or indirectly coupled to the engine, and a control device, wherein
the control device is adapted to recognise the ignition signal,
the control device is connected to the fuel injection control unit and to the ignition control unit and is also designed, after recognising the ignition-off signal, to shut off the fuel injection while maintaining the ignition, and
**characterised in that**
the control device is connected to the electric machine in order to continue to operate the engine initially at a defined speed after the ignition-off signal and subsequently stop it in accordance with a defined torque curve.

5. A device according to claim 4, **characterised in that** the electric machine is a starter and/or generator, especially a crankshaft starter-generator.

## Revendications

1. Procédé pour arrêter de façon contrôlée un moteur à combustion interne comprenant une commande d'injection de carburant et une commande d'allumage et pour lequel est en outre prévu un moteur électrique et/ou un alternateur (machine électrique) accouplé directement ou indirectement au moteur à combustion interne, procédé présentant les étapes suivantes :
- enregistrement d'un signal d'arrêt pour le moteur à combustion interne,
- coupure de l'injection de carburant tout en maintenant l'allumage, et
**caractérisé par**
les étapes :
- maintien d'une vitesse de rotation du moteur déterminée pendant un temps déterminé ou un nombre déterminé de rotations de vilebrequin après le signal d'arrêt au moyen de la machine électrique,
- arrêt du moteur à combustion interne au moyen de la machine électrique.

2. Procédé selon la revendication 1,
**caractérisé en ce que**
le temps pendant lequel la vitesse de rotation déterminée du moteur à combustion interne est maintenu est de 50 à 500 ms, notamment de 200 ms, ou l'on choisit un nombre de rotations de vilebrequin de 1 à 4, notamment de 2.

3. Procédé selon la revendication 1 ou 2,
**caractérisé en ce que**
l'arrêt est effectué selon une courbe de vitesse de rotation ou de couple de rotation prédéterminée.

4. Dispositif pour arrêter de façon contrôlée un moteur à combustion interne comprenant une commande d'injection de carburant, une commande d'allumage ainsi qu'un moteur électrique et/ou alternateur (machine électrique) accouplé directement ou indirectement au moteur à combustion interne, et un appareil de commande,
l'appareil de commande étant conçu pour identifier le signal d'allumage, l'appareil de commande étant relié à la commande d'injection de carburant et la commande d'allumage et en outre étant conçu pour couper l'injection de carburant tout en maintenant l'allumage dès l'identification du signal d'arrêt d'allumage,
**caractérisé en ce que**
l'appareil de commande est relié à la machine électrique pour continuer à faire fonctionner le moteur à combustion interne après le signal d'arrêt d'allumage d'abord avec une vitesse de rotation déterminée et pour l'arrêter ensuite selon une courbe de couple de rotation définie.

5. Dispositif selon la revendication 4,
**caractérisé en ce que**
la machine électrique est un démarreur et/ou un alternateur, notamment un vilebrequin-démarreur-alternateur.
